# EUROPÄISCHE PATENTSCHRIFT

(11) **EP 0 645 282 B1**
(45) Veröffentlichungstag und Bekanntmachung des Hinweises auf die Patenterteilung: **15.10.1997**
(21) Anmeldenummer: 94110519.9
(22) Anmeldetag: 06.07.1994
(51) Int. Cl.: B60R 9/04

(54) **Stützfuss zum endseitigen Abstützen eines Relingrohrs auf dem Dach eines Kraftfahrzeugs**
Stanchion for supporting the end of a vehicle roof rack rail
Pied de support de l'extrémité d'un profilé de galerie sur un toit de véhicule

(30) Priorität: 24.09.1993 DE 4332524
(43) Veröffentlichungstag der Anmeldung: 29.03.1995
(73) Patentinhaber: Happich Fahrzeug-Dachsysteme GmbH, D-42285 Wuppertal (DE)
(72) Erfinder: Evels, Brigitte, D-42369 Wuppertal (DE); Lumpe, Karl-Heinz, D-42279 Wuppertal (DE)

(56) Entgegenhaltungen:
- DE-A- 3 230 346
- DE-U- 8 231 689
- DE-U- 8 914 280
- US-A- 5 069 377

## Beschreibung

Die Erfindung bezieht sich auf einen Stützfuß zum endseitigen Abstützen eines Relingrohrs auf dem Dach eines Kraftfahrzeugs, der ein Befestigungsmittel zur Befestigungsanordnung auf dem Fahrzeugdach, eine auf dem Dach zur Anlage kommende Auflagefläche, einen von der Auflagefläche höhen- und seitenbeabstandeten Steckzapfen für die Herstellung einer Steckverbindung mit dem Relingrohr, mindestens einen ihn quer durchsetzenden Durchbruch sowie den mindestens einen Durchbruch beidseitig abdeckende Verkleidungsplatten aufweist.

Die Relingrohre einer Dachreling werden üblicherweise auf dem Dach eines Kraftfahrzeugs mittels Stützfüßen an den Enden abgestützt. Die Stützfüße sind in der Regel als massive Metallkörper in Form von Kokillenguß oder Druckgußteilen ausgebildet. Ferner ist es durch die deutsche Gebrauchsmusterschrift 82 31 689, von der die Erfindung ausgeht, bekanntgeworden, solche Stützfüße als Leichtmetallschmiedeteile auszubilden. Allen bisher bekanntgewordenen Stützfüßen haftet der Nachteil an, daß sie in der Herstellung aufwendig sind und einer arbeitsintensiven Nachbearbeitung bedürfen, in dem sie - in der Regel von Hand - auf Maß und in Form geschliffen werden müssen.

Der vorliegenden Erfindung liegt deshalb die Aufgabe zugrunde, einen Stützfuß der eingangs genannten Art zu schaffen, der besonders einfach und kostengünstig herzustellen ist und dessen Sichtseiten keine Nacharbeit, wie Schleifen od. dgl. verlangen.

Diese Aufgabe wird erfindungsgemäß dadurch gelöst, daß der Stützfuß aus einem quer zur Längsachse abgetrennten Abschnitt einer stranggepreßten Profilleiste besteht.

Für die Herstellung eines Stützfußes bzw. einer Vielzahl von Stützfüßen wird demnach eine Profilleiste endlicher Länge extrudiert und von dieser Profilleiste werden dann Stützfüße bildende Scheiben abgeschnitten, die, nachdem sie mit Verkleidungsplatten versehen wurden, einbaufertig sind ohne daß es einer aufwendigen Nachbearbeitung bedarf. Der Querschnitt einer stranggepreßten Profilleiste läßt sich den Kundenwünschen entsprechend gestalten, so daß der neue Stützfüß neben den äußerst günstigen Fertigungskosten auch den ästhetischen Ansprüchen genügt.

Bei Fahrzeugen mit im wesentlichen waagerecht verlaufender Dachfläche ist vorgesehen, daß der Abschnitt Schnittflächen oder Breitseiten aufweist, die senkrecht zur Auflagefläche verlaufen. Ist hingegen die Dachfläche mehr oder weniger gekrümmt oder sollte es erwünscht sein, daß die Stützfüße einer Dachreling gegeneinander geneigt sind, empfiehlt es sich, daß der Abschnitt Schnittflächen oder Breitseiten aufweist, die schräg zur Auflagefläche verlaufen. Im allgemeinen sollten aber die Schnittflächen oder Breitseiten parallel zueinander verlaufen, obgleich es natürlich möglich ist, die Schnittflächen so zu legen, daß eine vergrößerte Auflagefläche entsteht, wobei allerdings Abfall in Kauf zu nehmen ist.

Eine weitere Ausgestaltung der Erfindung sieht vor, daß der Stützfuß aus Aluminium oder einer Aluminiumlegierung besteht. Dabei kann für die Herstellung des Stützfußes grundsätzlich das gleiche Material, aus dem auch die Relingrohre bestehen, eingesetzt werden mit dem Vorteil, daß hinsichtlich Glanzgrad, Farbechtheit u. dgl. kein Unterschied zwischen Stützfuß und Relingrohr besteht.

Um eine den technischen Anforderungen genügende Festigkeit zu erzielen, kann gemäß einer weiteren Ausgestaltung der Erfindung der zumindest eine Durchbruch durch eine Verrippung in mehrere Durchbrüche unterteilt sein. Diese Maßnahme spart Material und Gewicht und ermöglicht dünne Wandstärken.

Die Auflagefläche des Stützfußes ist an einer diese von dem zumindest einen Durchbruch trennenden Wand ausgebildet, die eine Öffnung für ein Befestigungsmittel aufweist. Die Öffnung kann dabei als eine die Wand durchsetzende Gewindebohrung ausgebildet sein. In die Gewindebohrung ist ein als Gewindebolzen ausgebildetes Befestigungsmittel einschraubbar, auf dessen anderes Ende vom Fanrzeuginnern her eine Gewindemutter aufzuschrauben ist. Die Öffnung kann auch als ein die Wand durchsetzendes Langloch ausgeführt sein, welches von einem an der Fahrzeugkarosserie festgelegten Gewindebolzen durchsetzt wird, um daran den Stützfuß durch eine aufzuschraubende Gewindemutter am Fahrzeugdach zu sichern. Diese Ausbildung ermöglicht eine relativ einfache Demontage, die z.B. für Nachlackierungszwecke erwünscht sein kann.

Eine besonders gute Standfestigkeit des Stützfußes auf dem Fahrzeugdach läßt sich problemlos dadurch realisieren, daß die Auflagefläche des Stützfußes eine dachparallele Abfräsung aufweist.

Ein Ausführungsbeispiel der Erfindung wird nachfolgend anhand der Zeichnung näher erläutert, und es zeigen:
- Fig. 1: eine auf einem Fahrzeugdach angeordnete Dachreling mit von Stützfüßen getragenen Relingrohren,
- Fig. 2: einen der Stützfüße nach Fig. 2 in Seitenansicht ohne Verkleidungplatten und
- Fig. 3: den Stützfuß nach Fig. 2 in Draufsicht mit Verkleidungsplatten.

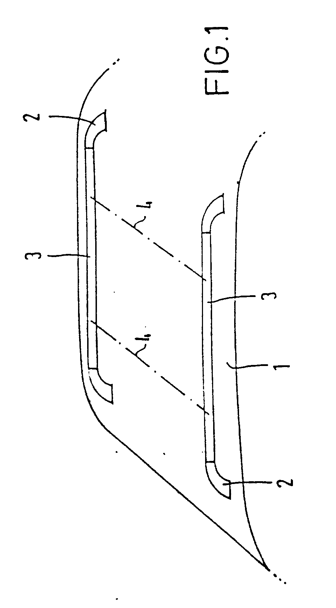

Fig. 1 läßt das Dachblech 1 eines nicht näher dargestellten Fahrzeugs mit einem darauf angeordneten Dachlastenträger erkennen. Der Dachlastenträger wird aus zwei Relings, bestehend aus Stützfüßen 2 und Relingrohren 3 sowie aus lediglich strichpunktiert angedeuteten Querträgern 4, die an den Relingrohren 3 befestigt sind, gebildet. Die Relings erstrecken sich zumindest annähernd parallel zueinander und verlaufend in Fahrzeuglängsrichtung.

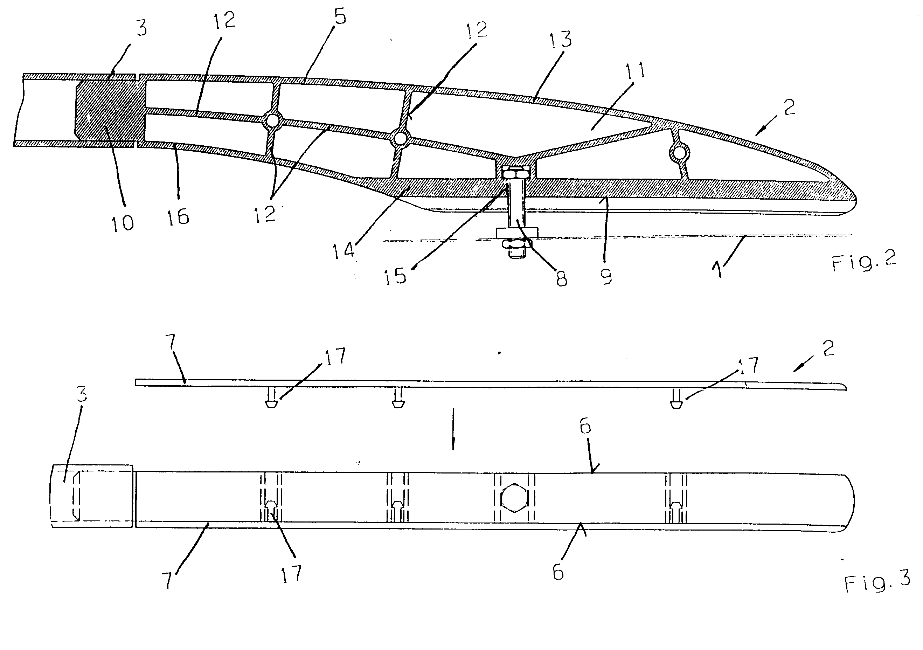

Der in den Fig. 2 und 3 dargestellte Stützfuß 2 besteht aus dem tragenden metallischen Körperteil 5 und den daran zwecks Abdeckung der Breitseiten 6 befestigten Verkleidungsplatten 7. Der Stützfuß 2, der mit einem als Gewindebolzen 8 ausgebildeten Befestigungsmittel am Fahrzeugdach in nicht näher dargestellter Weise befestigbar ist, weist die Besonderheit auf, daß er aus einem quer zur Längsachse abgetrennten Abschnitt einer stranggepreßten Profilleiste (nicht gezeigt) gebildet ist. Der Querschnitt der Profilleiste entspricht beispielsweise dem in Fig. 2 gezeigten Körperteil 5. Der Stützfuß 2 weist eine auf dem Dachblech 1 zur Anlage kommende Auflagefläche 9, einen von dieser höhen- und seitenbeabstandeten Steckzapfen 10 für die Herstellung einer Steckverbindung mit dem Relingrohr 3, mindestens einen ihn quer durchsetzenden Durchbruch 11 sowie den mindestens einen Durchbruch 11 beidseitig abdeckende Verkleidungsplatten 7 auf. Im Ausführungsbeispiel nach Fig. 2 ist der Durchbruch 11 durch eine Verrippung 12 in mehrere Druchbrüche unterteilt. Durch die Verrippung 12 kann die Kopfwand 13, wie auch die Bodenwand 14 ohne Stabilitätsverlust relativ dünn gehalten werden. Der Stützfuß 2 besteht mit Ausnahme der Verkleidungsplatten 7, die zweckmäßigerweise als Kunststoff-Spritzgußteile ausgebildet sind, aus Aluminium oder einer Aluminiumlegierung.

Die Schnittflächen oder Breitseiten 6 des Stützfußes 2 können je nach gewünschtem Anforderungsprofil parallel oder nicht parallel zueinander, wie auch senkrecht oder schräg zur Auflagefläche 9 verlaufen. Die Auflagefläche 9 kann in der Regel unbearbeitet bleiben, in bestimmten Einbausituationen aber auch eine dachparallele Abfräsung aufweisen.

Die Bodenwand 14 weist eine Durchgangsöffnung 15 auf, die wahlweise als Gewindebohrung oder als Langloch ausgeführt sein kann. Die Kopfwand 13 geht ebenso wie die Verbindungswand 16 zwischen der Bodenwand 14 und dem Steckzapfen 10 fluchtend in das Relingrohr 3 über. Hingegen springen die Breitseiten 6 des Stützfußes 2 stufenförmig gegenüber dem Relingrohr 3 zurück. Diesen zurückspringenden Bereichen sind die darin eingesetzten Verkleidungsplatten 7 hinsichtlich ihrer Dicke angepaßt, so daß sich auch zwischen den Verkleidungsplatten 7 und dem Relingrohr 3 ein glatter Übergang ergibt. Die Verkleidungsplatten 7 weisen rückseitig angeformte Befestigungsmittel 17 auf, die entsprechend der Lehre des deutschen Gebrauchsmusters 82 31 689 ineinandergreifen wahlweise aber auch klipsartig mit dem Körperteil 5 verrasten können.

Wesentlich bei dem neuen Stützfuß ist die Maßnahme, einen langgestreckten leistenförmigen Strangpreßkörper in einzelne Stücke mit geringer axialer Ausdehnung zu unterteilen, welche als praktisch fertige Stützfüße zum Einsatz gelangen können.

## Patentansprüche

1. Stützfuß (2) zum endseitigen Abstützen eines Relingrohrs (3) auf dem Dach eines Kraftfahrzeugs, der ein Befestigungsmittel zur Befestigungsanordnung auf dem Fahrzeugdach, eine auf dem Dach zur Anlage kommende Auflagefläche (9), einen von der Auflagefläche (9) höhen- und seitenbeabstandeten Steckzapfen (10) für die Herstellung einer Steckverbindung mit dem Relingrohr (3), mindestens einen ihn quer durchsetzenden Durchbruch (11) sowie den mindestens einen Durchbruch (11) beidseitig abdeckende Verkleidungsplatten (7) aufweist, dadurch gekennzeichnet, daß der Stützfuß (2) aus einem quer zur Längsachse abgetrennten Abschnitt einer stranggepreßten Profilleiste besteht.

2. Stützfuß nach Anspruch 1, dadurch gekennzeichnet, daß der Abschnitt Schnittflächen oder Breitseiten (6) aufweist, die senkrecht zur Auflagefläche (9) verlaufen.

3. Stützfuß nach Anspruch 1, dadurch gekennzeichnet, daß der Abschnitt Schnittflächen oder Breitseiten (6) aufweist, die schräg zur Auflagefläche (9) verlaufen.

4. Stützfuß nach wenigstens einem der Ansprüche 1 bis 3, dadurch gekennzeichnet, daß die Schnittflächen oder Breitseiten (6) parallel zueinander verlaufen.

5. Stützfuß nach wenigstens einem der Ansprüche 1 bis 4, dadurch gekennzeichnet, daß der Stützfuß (2) aus Aluminium oder einer Aluminiumlegierung besteht.

6. Stützfuß nach wenigstens einem der Ansprüche 1 bis 5, dadurch gekennzeichnet, daß der zumindest eine Durchbruch (11) durch eine Verrippung (12) in mehrere Durchbrüche unterteilt ist.

7. Stützfuß nach wenigstens einem der Ansprüche 1 bis 6, dadurch gekennzeichnet, daß die Auflagefläche (9) an einer diese von dem zumindest einen Durchbruch (11) trennenden Wand (14) ausgebildet ist und daß die Wand (14) eine Öffnung (15) für das Befestigungsmittel aufweist.

8. Stützfuß nach Anspruch 7, dadurch gekennzeichnet, daß die Öffnung (15) als eine die Wand durchsetzende Gewindebohrung ausgebildet ist.

9. Stützfuß nach Anspruch 7, dadurch gekennzeichnet, daß die Öffnung (15) als ein die Wand durchsetzendes Langloch ausgebildet ist.

10. Stützfuß nach wenigstens einem der Ansprüche 1 bis 9, dadurch gekennzeichnet, daß die Auflagefläche (9) eine dachparallele Abfräsung aufweist.

## Claims

1. Supporting foot (2) for supporting the end of a rail tube (3) on the roof of a motor vehicle, which supporting foot has a fastening means for fastening it on the vehicle roof, a supporting surface (9) coming to rest on the roof, a plug-in pin (10), spaced apart vertically and laterally from the supporting surface (9), for the production of a plug-in connection to the rail tube (3), at least one opening (11) which passes transversely through it, and covering panels (7) which cover the at least one opening (11) on both sides, characterized in that the supporting foot (2) comprises a section of an extruded profile strip, the section being separated transversely with respect to the longitudinal axis.

2. Supporting foot according to Claim 1, characterized in that the section has cut surfaces or broad sides (6) which run perpendicularly with respect to the supporting surface (9).

3. Supporting foot according to Claim 1, characterized in that the section has cut surfaces or broad sides (6) which run obliquely with respect to the supporting surface (9).

4. Supporting foot according to at least one of Claims 1 to 3, characterized in that the cut surfaces or broad sides (6) run parallel to one another.

5. Supporting foot according to at least one of Claims 1 to 4, characterized in that the supporting foot (2) is made of aluminium or an aluminium alloy.

6. Supporting foot according to at least one of Claims 1 to 5, characterized in that the at least one opening (11) is divided into a plurality of openings by ribbing (12).

7. Supporting foot according to at least one of Claims 1 to 6, characterized in that the supporting surface (9) is formed on a wall (14) which separates the latter from the at least one opening (11), and in that the wall (14) has an aperture (15) for the fastening means.

8. Supporting foot according to Claim 7, characterized in that the aperture (15) is formed as a threaded hole which passes through the wall.

9. Supporting foot according to Claim 7, characterized in that the aperture (15) is formed as an elongated hole which passes through the wall.

10. Supporting foot according to at least one of Claims 1 to 9, characterized in that the supporting surface (9) is milled away parallel to the roof.

## Revendications

1. Pied de support (2) de l'extrémité d'un profilé de galerie (3) sur le toit d'un véhicule, qui présente un moyen de fixation pour un agencement de fixation sur le toit du véhicule, une face d'appui (9) venant se poser sur le toit, un plot d'encastrement (10) distant en hauteur et latéralement de la face d'appui (9) pour réaliser une liaison par encastrement avec le profilé de galerie (3), au moins un passage (11) le traversant transversalement ainsi que des plaques de recouvrement (7) recouvrant sur les deux cotés ledit au moins un passage (11), caractérisé en ce que le pied de support (2) se compose d'un tronçon d'une baguette profilée par filage à la presse, tranché transversalement par rapport à l'axe longitudinal.

2. Pied de support suivant la revendication 1, caractérisé en ce que le tronçon présente des faces de coupe ou des côtés larges (6), qui sont orientés perpendiculairement à la face d'appui (9).

3. Pied de support suivant la revendication 1, caractérisé en ce que le tronçon présente des faces de coupe ou des côtés larges (6), qui sont orientés obliquement à la face d'appui (9).

4. Pied de support suivant au moins une des revendications 1 à 3, caractérisé en ce que les faces de coupe ou les côtés larges (6) sont parallèles l'un à l'autre.

5. Pied de support suivant au moins une des revendications 1 à 4, caractérisé en ce que le pied de support (2) est constitué d'aluminium ou d'un alliage d'aluminium.

6. Pied de support suivant au moins une des revendications 1 à 5, caractérisé en ce que ledit au moins un passage (11) est subdivisé en plusieurs passages par un nervurage (12).

7. Pied de support suivant au moins une des revendications 1 à 6, caractérisé en ce que la face d'appui (9) est formée sur une paroi (14) la séparant dudit au moins un passage (11) et en ce que la paroi (14) présente une ouverture (15) pour le moyen de fixation.

8. Pied de support suivant la revendication 7, caractérisé en ce que l'ouverture (15) est constituée par un trou fileté traversant la paroi.

9. Pied de support suivant la revendication 7, caractérisé en ce que l'ouverture (15) est constituée par un trou allongé traversant la paroi.

10. Pied de support suivant au moins une des revendications 1 à 9, caractérisé en ce que la face d'appui (9) présente un fraisage parallèle au toit.
